# EUROPÄISCHE PATENTSCHRIFT

(11) **EP 3 243 639 B1**
(45) Veröffentlichungstag und Bekanntmachung des Hinweises auf die Patenterteilung: **15.01.2020**
(21) Anmeldenummer: 17168410.3
(22) Anmeldetag: 27.04.2017
(51) Int. Cl.: B29C 67/24, B29C 45/76, B29C 45/77, B29C 70/48, B29C 31/06, B29B 7/76

(54) **FORMGEBUNGSVERFAHREN UND EINBRINGVORRICHTUNG**
MOULDING METHOD AND INSERTING DEVICE
PROCÉDÉ DE MOULAGE ET DISPOSITIF D'INTRODUCTION

(30) Priorität: 12.05.2016 AT 504382016
(43) Veröffentlichungstag der Anmeldung: 15.11.2017
(73) Patentinhaber: ENGEL AUSTRIA GmbH, 4311 Schwertberg (AT)
(72) Erfinder: REITH, Lorenz, 4040 Linz (AT); HARTUNG, Gregor, 4400 Steyr (AT); FLATH, Stefan, 4421 Aschach / Steyr (AT)
(74) Vertreter: Torggler & Hofinger Patentanwälte

(56) Entgegenhaltungen:
- DE-A1- 3 803 595

## Beschreibung

Die vorliegende Erfindung betrifft ein Formgebungsverfahren für eine Formgebungsmaschine gemäß den Merkmalen des Oberbegriffs des Anspruchs 1 und eine Einbringvorrichtung gemäß den Merkmalen des Oberbegriffs des Anspruchs 11.

Eine gängiger Prozess für die Serienfertigung endlosfaserverstärkter Strukturbauteile ist das Hochdruck-Harzinjektionsverfahren (HP-RTM; high pressure resin transfer moulding). Dieses zeichnet sich unter anderem dadurch aus, dass Faserverbundbauteile mit dem gewünschten Fasergehalt in kurzer Zykluszeit dargestellt werden können. Ein entsprechendes Verfahren ist unter anderem in DE102012110354A1 näher erläutert.

Als Ausgangsmaterialien werden hierbei trockene Faserhalbzeuge (Preforms) auf Basis von Karbon- oder Glasfasertextilien passgenau in ein Formgebungswerkzeug eingelegt. Nach dem Schließen des Formgebungswerkzeugs wird die Menge an Restluft in der Kavität zumeist durch Evakuieren der Form reduziert. Dann erfolgt die Injektion eines reaktiven Fluids (beispielsweise ein reaktives Matrixsystem) in die geschlossene Kavität, wodurch das textile Verstärkungselement benetzt und imprägniert wird. Als reaktive Matrixsysteme werden hierbei beispielsweise MDI basierte Polyurethansysteme (bzw. Polyol und Isoncyanat als reaktive Einzelkomponenten), Epoxidharze (Bisphenol A basierte Harze und aminische Härter), ε-Caprolactam und entsprechende additive als Precursor von Polyamid 6, Vinylester oder auch polyimidbasierte Systeme eingesetzt, welche in einem beheizten Formgebungswerkzeug innerhalb weniger Minuten ausreagieren können.

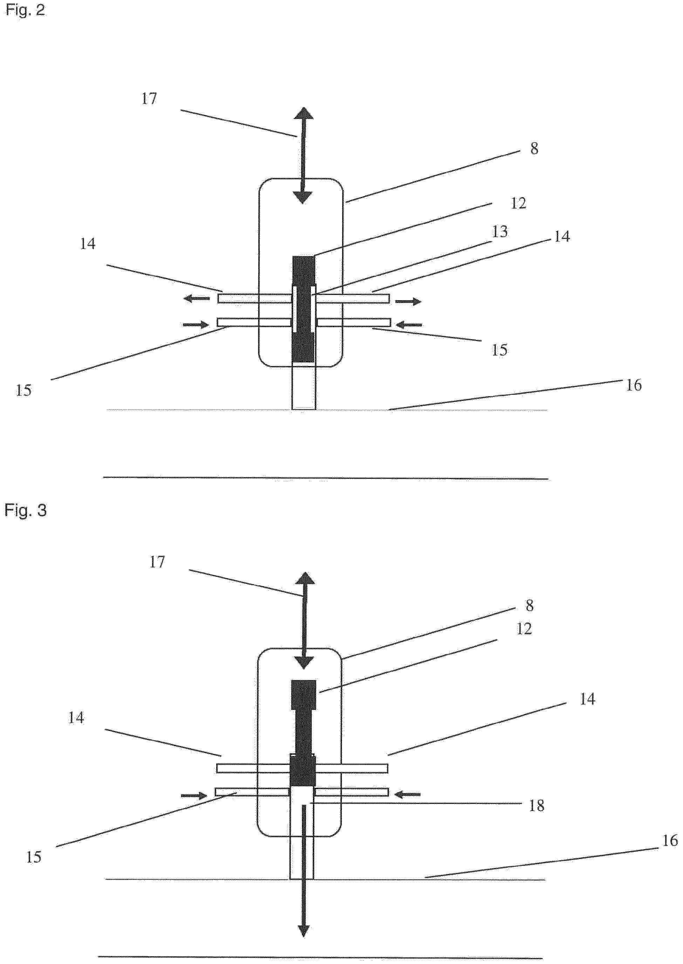

Der Vermischungs- und Injektionsprozess wird mit einem an das Formgebungswerkzeug angebrachten Hochdruck-Gegenstrommischkopf realisiert, dessen relevante Funktionen im Folgenden kurz zusammengefasst seien (siehe Figuren 2 und 3).

Ein dem Stand der Technik entsprechender Hochdruck-Gegenstrommischkopf besteht aus zumindest zwei meist gegenüberliegend angeordneten Injektionsdüsen durch welche die reaktiven Komponenten geführt werden und einer dazwischen angeordneten Mischkammer, sowie einem darin befindlichen axial beweglichen Ausräumschieber. Grundsätzlich arbeitet ein solcher Mischkopf in zwei Betriebsmodi, dem Rezirkulationsmodus, bei welchem die jeweiligen Komponenten ohne vermischt zu werden über eine Nut am Ausräumschieber zurück in den jeweiligen Tagesbehälter geführt werden, sowie den Injektionsmodus, bei welchem nach axial rückwärtiger Bewegung des Ausräumschiebers die Komponenten in der Mischkammer vereinigt werden und die gemischte reaktive Masse in die Kavität eingebracht wird. Die Beendigung der Injektion findet durch entgegengesetzte axiale Bewegung des Ausräumschiebers statt, wodurch wieder eine Rezirkulation stattfindet und die Mischkammer gereinigt wird. Es sind einige weitere Varianten zur Verbesserung entsprechender Mischköpfe hinsichtlich Mischgüte, Verarbeitung von gefüllten Systemen, Faserzuführung, verbesserter Reinigung, etc. vorgeschlagen worden. Das grundsätzliche Aufbauprinzip eines solchen Mischkopfes bleibt dabei aber weitestgehend unverändert.

Als Abschaltdruck ist in diesem Kontext als jener gemessene Druck in der Kavität definiert, bei welchem der Übergang von Injektions- auf Rezirkulationsmodus, also vereinfacht gesagt die Beendigung der Einbringung des reaktiven Fluids, ausgelöst wird. Dieser Abschaltdruck unterscheidet sich jedoch üblicherweise aufgrund der Reaktionszeit der Einbringvorrichtung, insbesondere des Mischkopfs, vom gemessenen Maximaldruck in der Kavität.

Als entscheidender Parameter für die Herstellung hochqualitativer, maßhaltiger und vor allem porenfreier Bauteile ist in erster Linie der Forminnendruck während der Aushärtung anzusehen. So führt ein zu geringer Forminnendruck während der Aushärtung zur Entstehung von teils sichtbaren Bauteilfehlern wie Lunkern und sogenannten Pinholes. Ferner kann es aber auch zu visuell nicht erkennbaren strukturellen Schwachstellen, wie etwa einer verstärkten Porosität oder Fehlstellen bei der Faser/Matrix Anhaftung kommen. Diese wirken sich in besonderem Maße nachteilig auf die Gebrauchseigenschaften der Bauteile aus.

Anzunehmen wäre daher, dass ein möglichst hoher Forminnendruck für die Herstellung von Bauteilen nach dem Hochdruck-Harzinjektionsverfahren immer vorteilhaft wäre. Dies führt allerdings zu entsprechenden ökonomischen Nachteilen hinsichtlich der notwendigen Schließkräfte und der Abnutzung von Dichtungen. Aus ökonomischer Sicht hat sich daher gezeigt, dass der notwendige Forminnendruck immer bauteilabhängig ist.

Im Laufe der Entwicklung der Hochdruck-Harzinjektionsverfahren wurden selbstverständlich bereits verschiedenste Vorschläge zur Verfahrensverbesserung angeregt.

Die DE3803595A1 offenbart in diesem Kontext eine Messung des Forminnendrucks während des Injektionsvorgangs, sowie eine Beendigung der Injektion bei Erreichen eines voreingestellten Forminnendrucks. Ein ähnlicher Ansatz wird in DE10309814B3 sowie EP1601520B1 für einen Überflutungsprozess beschrieben.

Des Weiteren offenbart die DE3521948A1 einen Drucksensor im Anguss einer Kavität, dessen Signal verwendet wird um die Dosiermenge des reaktiven Fluids anzupassen und so eine gleichmäßigere Injektion auch bei Einlegeteilen realisieren zu können.

Ein alternativer Ansatz ist weiters die Verwendung von hinterlegten Referenzdruckkurven, welche den Druckverlauf eines Idealzyklus beschreiben. So wird in DE10300101A1 eine Drucküberwachung der Flüssigdosieranlage durch den Vergleich des realen Druckverlaufs mit hinterlegten Referenzdruckkurven angeregt. Insbesondere wird hierbei angeregt den charakteristischen Druckverlauf beim Füllen einer Form oder den entsprechenden Mischkopfdruck als Schutzkriterium vor zu hohen Drücken in der Dosieranlage zu verwenden.

Bei einer dem Stand der Technik entsprechenden Betriebsweise eines Formgebungsverfahrens, insbesondere eines HP-RTM Verfahrens, wird üblicherweise die Injektion nach dem Erreichen einer voreingestellten Druckschwelle (Abschaltdruck) beendet. Der entsprechende Abschaltdruck kann hierbei sowohl als Forminnendruck in der Kavität als Druck in einer der Zuleitungen am Mischkopf oder auch an einer der Förderpumpen gemessen werden.

Unabhängig vom Ort der Druckmessung liegt der in der Praxis erreichte maximale Druck in der Kavität zwischen 5 - 50 bar über dem eingestellten Abschaltdruck. Diese Druckdifferenz lässt sich auf die Dauer des Abschaltvorganges vom Geben des Abschaltsignals bis zur eigentlichen Beendigung des Abschaltvorganges zurückführen (Verfahren des Ausräumschiebers bei einem dem Stand der Technik entsprechenden Hochdruck-Gegenstrommischkopf). Die beobachtete Druckdifferenz zwischen Abschaltdruck und max. Forminnendruck zeigt hierbei eine Abhängigkeit von verschiedensten Einflussfaktoren, beispielsweise dem Injektionsvolumen, dem verwendeten Formgebungswerkzeug sowie dessen Steifigkeit, der Schlauchlänge und Elastizität, der Temperatur des Werkzeugs und des zugeführten reaktiven Fluids, der Positionierung des Druckaufnehmers, sowie dem Volumen der Mischkammer und dem Angussdurchmesser. Dies führt dazu, dass bei ein und demselben Abschaltkriterium der praktisch erreichte maximale Forminnendruck je nach Werkzeug, vor allem aber auch von Bauteil zu Bauteil erheblich variieren kann.

Das Erreichen eines möglichst konstanten maximalen Forminnendruck ist jedoch für den nachfolgenden Aushärtungsprozess und die notwendige Maßhaltigkeit der Bauteile in höchstem Maße relevant.

Eine dem Stand der Technik entsprechende Betriebsweise wirkt sich daher besonders im Technikumsbetrieb nachteilig aus, wenn beispielsweise bei der Herstellung von FKV-Bauteilen verschiedene Materialien oder Lagenaufbauten getestet werden. Es besteht dann die Notwendigkeit für jedes neue Formwerkzeug oder Schließkraftprofil, aber auch bereits bei veränderten Preformaufbauten (Lagenaufbauten, Material) den Abschaltdruck neu experimentell zu bestimmen um den gewünschten maximalen Forminnendruck erreichen zu können.

Genauso wenig kann im Stand der Technik ein konstanter Serienprozess gewährleistet werden, da verschiedene äußere Bedingungen zu einer Schwankung des maximalen Forminnendruckes führen. Als Beispiele sei hier die Komponententemperatur der einzelnen reaktiven Komponenten angeführt, welche je nach Füllstand gewissen Schwankungen unterworfen ist, und wiederum die Viskosität des reaktiven Fluids und somit das Imprägnierverhalten sowie das Reaktionsprofil beeinflusst. Weiters sind die verwendeten Preforms üblicherweise Gewichtsschwankungen unterworfen und sind auch in Bezug auf ihre Abmessungen bzw. der Homogenität des Binderauftrags nicht vollständig konstant, sodass sich Abweichungen ergeben können, welche nicht durch vorherige Anpassung von Prozessparametern korrigiert werden können.

Zusammenfassend kann daher festgestellt werden, dass eine dem Stand der Technik entsprechende Betriebsweise von Reaktivanlagen sowohl hinsichtlich der Prozesssicherheit als auch der Bedienerfreundlichkeit in großem Maße Nachteile sowohl im Serien- als auch im Technikumsbetrieb mit sich bringt.

Aufgabe der Erfindung ist es daher, ein Formgebungsverfahren und eine Einbringungsvorrichtung bereitzustellen, welche eine größere Reproduzierbarkeit des maximalen Forminnendruck als im Stand der Technik ermöglichen.

Insbesondere ist es ein Ziel der vorliegenden Erfindung ein Formgebungsverfahren bereitzustellen, welches eine genauere und vor allem eine hinsichtlich des erreichten maximalen Forminnendruckes besser reproduzierbare Abschaltung des Injektionsprozesses beim HP-RTM Verfahren bewirkt.

Die Aufgabe wird durch ein Formgebungsverfahren gemäß den Merkmalen des Oberbegriffs des Anspruchs 1 und eine Einbringungsvorrichtung gemäß den Merkmalen des Anspruchs 11 gelöst.

Erfindungsgemäß geschieht dies dadurch, dass während des Einbringens des Fluids in das Formwerkzeug aus dem Verlauf des Parameters, welcher für den Druck des Fluids charakteristisch ist, eine Vielzahl von Prognosewert des Parameters berechnet wird und ein Zeitpunkt der Beendigung des Einbringens des Fluids in das Formwerkzeug auf Basis der Prognosewerte festgelegt wird, dass ein vorab definiertes Druckmaximum (P₃) im Wesentlichen erreicht wird.

Das Einbringen des Fluids wird auch als Injektion bzw. Injektionsprozess bezeichnet. Die Beendigung des Einbringens des Fluids wird auch als Abschaltung bezeichnet.

Ein wichtiger Aspekt der Erfindung ist es also, die dem Stand der Technik entsprechenden statischen Beendigungskriterien (bspw. Grenzwert für Abschaltdruck) zur Beendigung des Injektionsprozesses durch ein dynamisches Kriterium zu ersetzen. Nach dem Geben eines Beendigungssignals steigt der Druck in der Kavität bzw. am Mischkopf noch weiter an. Dies resultiert unter anderem aus der Dauer der Stößelbewegung sowie der Zeitdauer zur hydraulischen Ansteuerung. Bei dieser Reaktionszeit handelt es sich typischerweise in Summe um einige Milli- oder Zehntelsekunden. Die Reaktionszeit wird auch als Abschaltdauer bezeichnet.

Das reaktive Fluid wird in der Regel flüssig sein, kann aber beispielsweise auch Partikel von Feststoffen als Zusatz enthalten.

Der Parameter, welcher für den Druck des Fluids charakteristisch ist, kann beispielsweise in der Kavität des Formwerkzeugs (angussnah oder angussfern), in einem Mischkopf oder in Zuführleitungen für die Zufuhr des Fluids zum Formwerkzeug oder zum Mischkopf gemessen werden. Bei der Messung in einer Zufuhrleitung zum Mischkopf kann das Messgerät in Mischkopfnähe oder einer der Hochdruckdosierpumpen nachgeschaltet angeordnet sein. Auch eine gleichzeitige Messung, Prognose und Abschaltung anhand mehrerer Messgeräte oder nach Bildung eines gewichteten oder ungewichteten mittleren Druckwertes ist in diesem Kontext denkbar.

Erfindungsgemäß ist es vorgesehen, dass der Zeitpunkt der Beendigung des Einbringens des Fluids in das Formwerkzeug so festgelegt wird, dass ein vorab definiertes Druckmaximum im Wesentlichen erreicht wird. Dabei kann insbesondere eine Reaktionszeit der Einbringvorrichtung berücksichtigt werden.

Erfindungsgemäß ist es vorgesehen, dass während des Einbringens des Fluids eine Vielzahl von Prognosewerten aus dem Verlauf berechnet wird, vorzugsweise auf Basis des jeweils aktuellsten Verlaufs. Der Abschaltzeitpunkt kann durch diese Maßnahme genauer gesetzt werden, da durch die Vielzahl der Prognosewerte genauer eingeschätzt werden kann, wo der optimale Abschaltzeitpunkt zu setzen ist.

Die Erfindung kann bei allen Anwendungsfällen, die in Bezug auf den Stand der Technik diskutiert wurden, eingesetzt werden.

Weitere vorteilhafte Ausführungsformen der Erfindung sind in den abhängigen Ansprüchen definiert.

Als Kriterium dafür, dass das Druckmaximum erreicht wurde können beispielsweise ein Schwellwert für das Druckmaximum oder ein anderweitig definierter, zu erreichender Wertebereich dienen.

Zur Berechnung der Prognosewerte aus dem Verlauf kann eine prognostizierte Kurve berechnet werden und als Prognosewert kann ein Wert der prognostizierten Kurve verwendet werden, wobei die Kurve vorzugsweise mit der Zeit als Indexparameter berechnet wird. Dies ermöglicht eine relativ einfache Berechnung der Prognosewerte, da bekannte Verfahren zur Fortsetzung von Kurven zum Einsatz kommen können (bspw. lineare Regression oder polynomielle Kurvenfits).

Dabei kann für der Prognosewerte ein Wert der prognostizierten Kurve verwendet werden, welcher Wert einem Zeitpunkt entspricht, der einen vorgegebenen Zeitraum nach einem letzten Datenpunkt des der Berechnung der prognostizierten Kurve zugrunde gelegten Verlaufs liegt.

Der vorgegebene Zeitraum kann dabei einer Reaktionszeit der Einbringvorrichtung entsprechen.

Bevorzugt kann das reaktive Fluid ein reaktives Gemisch sein, welches bspw. aus zumindest zwei Komponenten gemischt wird.

Besonders bevorzugt kann auch eine Ausführungsform sein, bei der ein Faserhalbzeug in das Formwerkzeug eingebracht wird, bevor das reaktive Fluid in das Formwerkzeug eingebracht wird.

Das Messgerät kann einen oder mehrere Drucksensoren beinhalten.

Die Erfindung kann bevorzugt bei sogenannten HP-RTM Verfahren eingesetzt werden (HP-RTM: High Pressure Raising Transfer Molding). Dabei kann zum Mischen und Einbringen des Gemisches ein Mischkopf - insbesondere ein Hochdruckgegenstrommischkopf - vorgesehen sein.

Um eine Störung der Aushärtereaktion in der Kavität durch in der Kavität verbliebene Luft zu vermeiden, kann die Kavität des Formwerkzeugs vor dem Einbringen des Fluids evakuiert werden.

Schutz wird ebenfalls begehrt für eine Anordnung, umfassend eine Schließeinheit mit zwei Formaufspannplatten, an welchen jeweils ein Teil eines Formwerkzeugs befestigt ist, und eine erfindungsgemäße Einbringvorrichtung.

Die Steuer- oder Regeleinrichtung kann in eine Maschinensteuerung der Schließeinheit integriert sein.

Weitere Vorteile und Einzelheiten der Erfindung ergeben sich aus den Figuren sowie der dazu gehörigen Beschreibung einzelner Ausführungsbeispiele. Es zeigen:
- Fig. 1: eine schematische Darstellung einer erfindungsgemäßen Anordnung aus einer Schließeinheit und einer Einbringvorrichtung,
- Fig. 2: eine schematische Darstellung eines Hochdruck-Gegenstrommischkopfs im Rezirkulationsmodus
- Fig. 3: eine schematische Darstellung eines Hochdruck-Gegenstrommischkopfs im Injektionsmodus
- Fig. 4: ein Beispiel für einen Verlauf des Drucks in einer Kavität bei einem Formgebungsverfahren,
- Fig. 5: einen vergrößerten Ausschnitt des Verlaufs aus Fig. 4 zur Verdeutlichung der Erfindungsproblematik sowie
- Fig. 6: einen vergrößerten Ausschnitt des Verlaufs aus Fig. 4 zur Verdeutlichung einer erfindungsgemäßen Berechnung der Prognosewerte.

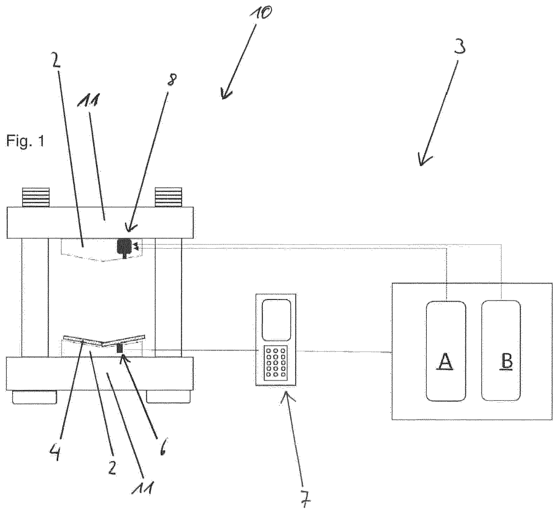

Die in Fig. 1 dargestellte Anordnung beinhaltet einen Schließeinheit 10 und eine Einbringvorrichtung 3.

Die Schließeinheit 10 verfügt über zwei Formaufspannplatten 11, an welchen Teile des Formwerkzeugs 2 montiert sind. In dieser Ausführungsform ist die Schließeinheit vertikal ausgeführt, wobei die obere Formaufspannplatte 11 relativ zur unteren Formaufspannplatte 11 zu Öffnen und Schließen des Formwerkzeugs 2 verfahrbar ist. Die Formaufspannplatten 11 sind von vier Holmen (wegen der Seitendarstellung sind nur zwei davon sichtbar) durchsetzt. An der Unterseite der unteren Formaufspannplatte 11 sind vier Druckkissen angeordnet, welche über die Holme als Zugstangen eine Schließkraft auf die bewegliche Formaufspannplatte ausüben. Hierzu können die Holme mit der oberen, beweglichen Formaufspannplatte 11 verriegelt werden.

Ein Hochdruck-Gegenstrommischkopf 8 der Einbringvorrichtung 3 dient dazu zwei Komponenten A und B zu einem flüssigen, reaktiven Gemisch zu vermischen und bei geschlossenem Formwerkzeug 2 in die entstehende Kavität 5 zu injizieren.

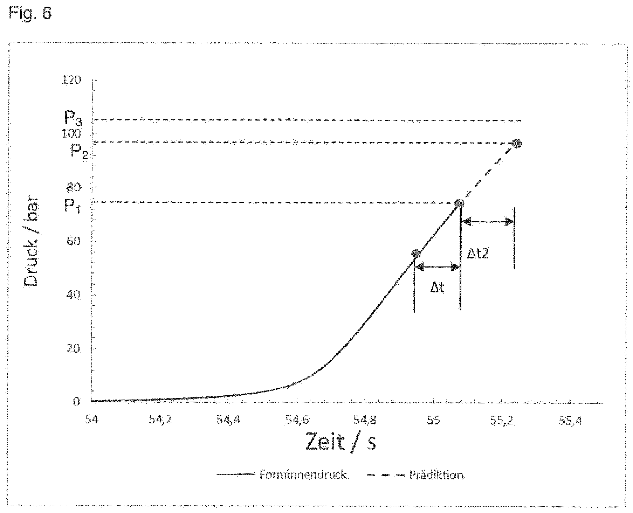

Es ist ein Messgerät 6 in Form eines Drucksensors vorgesehen, welches den Druck des reaktiven Gemisches in der Kavität 5 während des Einbringvorgangs wiederholt misst. Die Messwerte des Messgeräts 6 werden einer Steuer- oder Regeleinrichtung 7 zugeführt und in einem (nicht dargestellten) Speicher derselben gespeichert. Die gesammelten Messwerte bilden einen Druckverlauf als Verlauf V des Parameters, welcher für den Druck des Fluids charakteristisch ist. Dieser Druckverlauf wird während des Einbringvorgangs laufend aktualisiert. Er wird während des Einbringvorgangs als Grundlage für die Berechnung eines oder mehrerer Prognosewerte P₂ verwendet. Für ein Beispiel einer Berechnung eines Prognosewerts P₂ wird auf Fig. 6 und den entsprechenden Teil der Figurenbeschreibung verwiesen.

Die Steuer- oder Regeleinrichtung 7 ist in diesem Fall Teil der Maschinensteuerung der Schließeinheit 10, wenngleich sie separat dargestellt ist.

Fig.2 und Fig. 3 zeigen einen beispielhaften und vereinfachten Aufbau eines Hochdruck-Gegenstrom Mischkopfes 8 in Rezirkulations- (Fig. 2) sowie in Injektionsstellung (Fig. 3).

In der Rezirkulationsstellung (Fig. 2) ist der axial bewegliche Ausräumschieber 12 (Bewegungsrichtung durch Bezugszeichen 17 angedeutet) derart positioniert, das die über die zuführenden Kanäle 15 und daran anschließende Injektionsdüsen (nicht gezeigt) eingebrachten reaktiven Einzelkomponenten ohne vermischt zu werden über eine Nut am Ausräumschieber 12 und Rezirkulationsleitungen 14 zurück in den jeweiligen Tagesbehälter geführt werden.

Durch rückwärtige Bewegung des Ausräumschiebers 12 wird die Mischkammer 18 freigelegt und der Mischkopf 8 befindet sich im Injektionsmodus (Fig. 3). Die Rezirkulationsleitungen 14 werden hierbei durch den Ausräumschieber 12 verschlossen und die reaktiven Einzelkomponenten werden zur Vermischung in die Mischkammer 18 geleitet. Das daraus resultierende reaktive Fluid wird von der Mischkammer 18 in die Kavität des Formwerkzeugs 2 geleitet.

Die Beendigung der Injektion findet durch entgegengesetzte axiale Bewegung des Ausräumschiebers 12 statt, wodurch wieder eine Rezirkulation stattfindet und die Mischkammer 18 gereinigt wird.

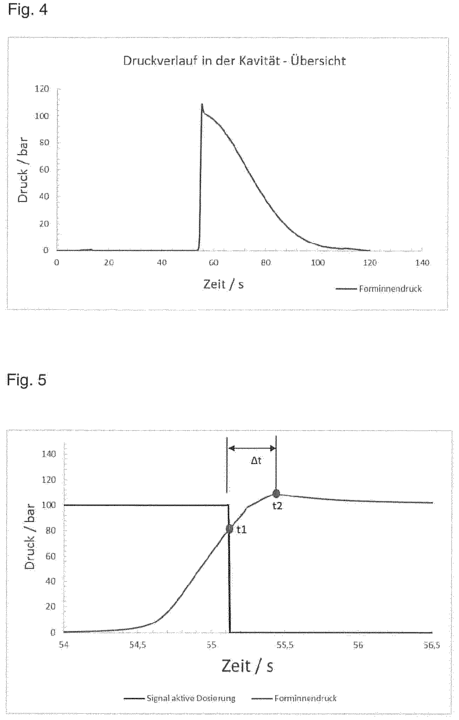

Fig. 4 ist eine Druckverlaufskurve während eines gesamten Formgebungsverfahrens aufgetragen gegen die Zeit. Wie zu erkennen ist, steigt der Druck in der Kavität 5 beim Einbringen des reaktiven Fluids recht steil an bis das Einbringen beendet wird. Beim darauffolgenden Ausreagieren des Fluids sinkt der Druck relativ langsam ab. Sobald das Bauteil im Wesentlichen ausreagiert ist, kann die Schließeinheit 10 geöffnet werden und das Bauteil entnommen werden.

In Fig. 5 ist der Zeitbereich des starken Druckanstiegs im Verlauf V aus Fig. 4 vergrößert dargestellt, wodurch dessen Struktur besser sichtbar wird. Zudem ist das Ansteuersignal S der Einbringungsvorrichtung 3 eingezeichnet. Der Zeitpunkt t₁, an dem das Ansteuersignal S auf 0 fällt, ist der Zeitpunkt an dem die Einbringvorrichtung zur Beendigung der Einbringung des Fluids angesteuert wird. Wie man sieht, steigt der Druck des Fluids auch nach t₁ noch an und das Druckmaximum wird erst beim Zeitpunkt t₂ erreicht. Bei vielen Versuchen haben die Erfinder beobachtet, dass der zeitliche Abstand Δt zwischen t₁ und t₂ relativ konstant bleibt, wobei Δt der Reaktionszeit der Einbringvorrichtung 3 entsprechen kann. Der Druckanstieg von t₁ nach t₂ entlang des Verlaufs V hingegen hängt bisweilen stark von den bereits beschriebenen Umgebungseinflüssen ab.

Die erfindungsgemäße Berechnung eines Prognosewerts wird anhand der Fig. 6 verdeutlicht.

Hierbei wird das Signal vom Messgerät 3 während des Injektionsprozesses betrachtet und zur prädiktiven Regelung und anschließender Beendigung des Injektionsprozesses herangezogen.

Aus dem beobachteten Verlauf V wird während des Injektionsvorganges zunächst der weitere Druckanstieg bzw. Druckverlauf anhand eines Algorithmus prognostiziert. Besonders bevorzugt ist hierbei die Prognose des Druckverlaufs V über zumindest einen Zeitraum, welcher der Dauer des Abschaltvorganges bzw. der Reaktionszeit der Einbringvorrichtung 3 entspricht. Die Art und Weise dieser Prädiktion des weiteren Verlaufes kann hierbei auf verschiedenste Arten realisiert werden.

Beispielsweise kann eine rein zeitaufgelöste Betrachtung des Druckanstiegs erfolgen (1. und / oder 2. Ableitung des Verlaufs V) und daraus ein Prognosewert P₂ für den weiteren Druckverlauf erstellt werden. Hierfür kann ein für Bediener einstellbares Beobachtungsintervall Δt1 definiert werden, sodass zu jedem Zeitpunkt während der Injektion beispielsweise der Druckanstieg während der letzten 100 ms zur weiteren Prädiktion herangezogen wird. Besonders bevorzugt ist in diesem Kontext, dass das Beobachtungsintervall Δt1 gleich lang oder kürzer ist als die entsprechende Reaktionszeit Δt der Einbringvorrichtung 3.

Im konkret in Fig. 6 dargestellten Fall wird während der Injektion als letztes der Wert P₁ gemessen. Es ist ein Beobachtungsintervall Δt1 definiert. Die Werte des Verlaufs V im Beobachtungsintervall Δt1 werden für die Berechnung eines Prognosewerts P₂ herangezogen. Im vorliegenden Ausführungsbeispiel sind Δt1 und Δt (aus Fig. 5) gleich lang. Aber auch eine kürzeres oder ein längeres Beobachtungsintervall Δt1 ist möglich. Außerdem ist ein Prädiktionszeitraum Δt2 definiert, welcher angibt, wie weit derjenige Zeitpunkt, dem ein Prognosewert P₂, nach P₁ liegen soll.

In diesem Fall wird für die Prognose ein konstanter Anstieg des Druckverlaufs V angenommen, d. h. der Verlauf V aus dem Prädiktionsintervall Δt1 wird im Prädiktionszeitraum Δt2 linear fortgeschrieben. Dadurch kann ein Prognosewert P₂ berechnet werden.

Vorzugsweise wird eine Vielzahl dieser Berechnungen während jedes Einbringvorgangs durchgeführt, jeweils auf Basis des Verlaufs V im Prädiktionsintervall Δt1, welches sich bis zum zuletzt gemessenen Wert des Verlaufs V erstreckt.

Alternativ kann der gemessene Druckverlauf V durch ein Polynom n-ten Grades abgebildet werden und damit der weitere Druckverlauf V prognostiziert werden.

Insbesondere ist es auch denkbar im Algorithmus für die Prädiktion des Druckverlaufs V auf vorher ermittelter Kennwerte wie die Steifigkeit der Schläuche bzw. des Formwerkzeugs 2 und / oder eingestellte Maschinenparameter wie beispielsweise der Eintragsleistung an reaktivem Fluid und / oder einer messbaren Preformcharakteristik (Masse, Faservolumen) zurückzugreifen.

Unabhängig von der Wahl des Algorithmus zur Prädiktion des Druckverlaufes V, wird der Abschaltpunkt in diesem Ausführungsbeispiel durch die Maschinensteuerung nun derart gesetzt, dass unter Einbeziehung eines Prognosewerts P₂ während des Abschaltvorganges der gewünschte maximale Forminnendruck P₃ im Wesentlichen erreicht wird.

Kurz zusammengefasst bewirkt diese dynamische Abschaltfunktionalität also eine Kompensation des variierenden Druckanstiegs während des Abschaltvorganges, da der Abschaltzeitpunkt auf Basis der durchgeführten Druckprädiktion gesetzt wird. Diese Funktionalität tritt an die Stelle eines einzelnen, vorher definierten Abschaltdruckes (was zwangsläufig immer zu höheren Drücken in der Kavität führt).

Grundsätzlich ist die Abschaltdauer weitestgehend unabhängig von den gewählten Prozessbedingungen. In gewissen Fällen kann es aber, z.B. abhängig von der Länge der Hydraulikschläuche zur Mischkopfansteuerung zu geringen Schwankungen kommen. Daher ist üblicherweise zumindest eine einmalige anlagenspezifische Einstellung der Abschaltdauer von Nöten. Im einfachsten Fall kann diese Abschaltdauer experimentell bestimmt und als einfacher Zeitwert in der Steuer- oder Regeleinrichtung 7 hinterlegt werden.

Im Sinne einer qualitätsoptimierten Fertigung kann jedoch auch ein automatischer Testzyklus zur Bestimmung der Abschaltdauer erfolgen.

Alternativ ist in der Serienfertigung auch denkbar, die Abschaltdauer anhand der Differenz zwischen vorgegebenem und erreichten Druck für den nächsten Zyklus anzupassen, um so eine nochmals verbesserte Prozesskonstanz erreichen zu können. Auf diese Weise ist außerdem durch Beobachtung der Abschaltdauer über mehrere Zyklen ein Monitoring des den Mischkopf steuernden Hydrauliksystems möglich.

Weiters kann es vorgesehen sein, dass die Steuerung bzw. Regelung des Reaktivprozesses, also sowohl des Mischungsverhältnis als auch der Eintragsleistung an reaktivem Fluid / reaktiver Masse, der vorgegebene maximale Druck, die Auswertung der Signale des Messgeräts, die Durchführung der Druckprognose und das Signal zum Beenden des Injektionsprozesses durch eine zentrale Steuerung bzw. Regelung, bevorzugt durch die Steuer- oder Regeleinheit 7 der Schließeinheit 10, erfolgt. Dies vereinfacht das Generieren eines synchronisierten, bauteilbezogenen Datensatzes, welcher für die qualitätsorientierte Serienfertigung notwendig ist.

## Patentansprüche

1. Formgebungsverfahren für eine Formgebungsmaschine, wobei
- ein reaktives Fluid in ein Formwerkzeug (2) eingebracht wird,
- während des Einbringens des Fluids in das Formwerkzeug (2) ein Verlauf (V) eines Parameters, welcher für einen Druck des Fluids charakteristisch ist, gemessen wird, und
- das Fluid durch Ausreagieren im Formwerkzeug (2) aushärtet,
**dadurch gekennzeichnet, dass**
- während des Einbringens des Fluids in das Formwerkzeug (2) aus dem Verlauf (V) eine Vielzahl von Prognosewerten (P₂) des Parameters berechnet wird und
- ein Zeitpunkt der Beendigung des Einbringens des Fluids in das Formwerkzeug (2) auf Basis der Vielzahl der Prognosewerte (P₂) so festgelegt wird, dass ein vorab definiertes Druckmaximum (P₃) im Wesentlichen erreicht wird.

2. Formgebungsverfahren nach Anspruch 1, **dadurch gekennzeichnet, dass** ein Zeitpunkt der Beendigung des Einbringens des Fluids in das Formwerkzeug (2) auf Basis zumindest eines der Vielzahl der Prognosewerte (P₂) - vorzugsweise des zuletzt berechneten Prognosewerts (P₂) - festgelegt wird.

3. Formgebungsverfahren nach Anspruch 1 oder 2, **dadurch gekennzeichnet, dass** zur Berechnung eines Prognosewerts (P₂) aus dem Verlauf (V) eine prognostizierte Kurve berechnet wird und als Prognosewert (P₂) ein Wert der prognostizierten Kurve verwendet wird, wobei die Kurve vorzugsweise mit der Zeit als Indexparameter berechnet wird.

4. Formgebungsverfahren nach Anspruch 3, **dadurch gekennzeichnet, dass** für den Prognosewert (P₂) ein Wert der prognostizierten Kurve verwendet wird, welcher Wert einem Zeitpunkt entspricht, der einen vorgegebenen Zeitraum nach einem letzten Datenpunkt des der Berechnung der prognostizierten Kurve zugrunde gelegten Verlaufs (V) liegt.

5. Formgebungsverfahren nach Anspruch 4, **dadurch gekennzeichnet, dass** der vorgegebene Zeitraum einer Reaktionszeit einer Einbringvorrichtung (3) entspricht.

6. Formgebungsverfahren nach einem der Ansprüche 1 bis 5, **dadurch gekennzeichnet, dass** als reaktives Fluid ein reaktives Gemisch verwendet wird.

7. Formgebungsverfahren nach Anspruch 6, **dadurch gekennzeichnet, dass** zumindest zwei Komponenten (A, B) vermischt werden, um das reaktive Gemisch zu bilden.

8. Formgebungsverfahren nach einem der Ansprüche 1 bis 7, **dadurch gekennzeichnet, dass** ein Faserhalbzeug (4) in das Formwerkzeug (2) eingebracht wird, bevor das reaktive Fluid in das Formwerkzeug (2) eingebracht wird.

9. Formgebungsverfahren nach einem der Ansprühe 1 bis 8, **dadurch gekennzeichnet, dass** ein HP-RTM-Verfahren als Formgebungsverfahren durchgeführt wird.

10. Formgebungsverfahren nach einem der Ansprüche 1 bis 9, **dadurch gekennzeichnet, dass** eine Kavität (5) des Formwerkzeugs vor dem Einbringen des Fluids evakuiert wird.

11. Einbringvorrichtung zum Einbringen eines reaktiven Fluids in ein Formwerkzeug (2), unter Durchführung eines Formgebungsverfahrens nach einem der Ansprüche 1 bis 10, mit
- einem Messgerät (6) zur Messung eines Parameters, welcher für einen Druck des Fluids charakteristisch ist,
- einer Steuer- oder Regeleinrichtung (7), welche dazu ausgebildet ist die Einbringvorrichtung (3) zu steuern oder zu regeln und einen Verlauf (V) von Messwerten des Messgeräts (6) in einem Speicher zu speichern,
**dadurch gekennzeichnet, dass** die Steuer- oder Regeleinrichtung (7) dazu ausgebildet ist,
- während des Einbringens des Fluids in das Formwerkzeug (2) aus dem Verlauf (V) eine Vielzahl von Prognosewerten (P₂) des Parameters zu berechnen und
- einen Zeitpunkt der Beendigung des Einbringens des Fluids in das Formwerkzeug (2) auf Basis der Vielzahl der Prognosewerte (P₂) so festzulegen, dass ein vorab definiertes Druckmaximum (P₃) im Wesentlichen erreicht wird.

12. Einbringvorrichtung nach Anspruch 11, **dadurch gekennzeichnet, dass** das reaktive Fluid ein reaktives Gemisch ist.

13. Einbringvorrichtung nach Anspruch 12, **dadurch gekennzeichnet, dass** zum Mischen und Einbringen des Gemisches ein Mischkopf vorgesehen ist, wobei vorzugsweise ein Hochdruck-Gegenstrommischkopf (8) vorgesehen ist, welcher zumindest zwei in eine Kammer weisende Düsen und einen Ausräumschieber für die Kammer umfasst.

14. Einbringvorrichtung nach einem der Ansprüche 11 bis 13, **dadurch gekennzeichnet, dass** das Messgerät (6) einen oder mehrere Drucksensoren beinhaltet.

15. Anordnung zur Durchführung eines Formgebungsverfahrens, umfassend eine Schließeinheit (10) mit zwei Formaufspannplatten (11), an welchen jeweils ein Teil eines Formwerkzeugs (2) befestigt ist, und eine Einbringvorrichtung nach einem der Ansprüche 11 bis 14.

16. Anordnung nach Anspruch 15, **dadurch gekennzeichnet, dass** die Steuer- oder Regeleinrichtung (7) in eine Maschinensteuerung der Schließeinheit (10) integriert ist.

## Claims

1. A shaping method for a shaping machine, wherein
- a reactive fluid is introduced into a mould (2),
- during the introduction of the fluid into the mould (2) a progression (V) of a parameter which is characteristic of a pressure of the fluid is measured , and
- the fluid hardens by reacting in the mould (2)
**characterised in that**
- during the introduction of the fluid into the mould (2) a plurality of prognosis values (P₂) of the parameter is calculated from the progression (V) and
- a time of conclusion of the introduction of the fluid into the mould (2) is established on the basis of the plurality of prognosis values (P₂) in such a way that a previously defined pressure maximum (P₃) is substantially reached.

2. A shaping method according to claim 1 **characterised in that** a time of conclusion of the introduction of the fluid into the mould (2) is established on the basis of at least one of the plurality of prognosis values (P₂), - preferably the last-calculated prognosis value (P₂).

3. A shaping method according to claim 1 or claim 2 **characterised in that** a prognosticated curve is calculated for calculating a prognosis value (P₂) from the progression (V) and a value of the prognosticated curve is used as the prognosis value (P₂), the curve preferably being calculated with time as an index parameter.

4. A shaping method according to claim 3 **characterised in that** a value of the prognosticated curve is used for the prognosis value (P₂), which value corresponds to a time which is a predetermined period after a last data point of the progression (V) on which the calculation of the prognosticated curve is based.

5. A shaping method according to claim 4 **characterised in that** the predetermined period corresponds to a reaction time of an introduction device (3).

6. A shaping method according to one of claims 1 to 5 **characterised in that** a reactive mixture is used as the reactive fluid.

7. A shaping method according to claim 6 **characterised in that** at least two components (A, B) are mixed to form the reactive mixture.

8. A shaping method according to one of claims 1 to 7 **characterised in that** a semifinished fibre product (4) is introduced into the mould (2) before the reactive fluid is introduced into the mould (2).

9. A shaping method according to one of the claims 1 to 8 **characterised in that** an HP-RTM process is performed as the shaping method.

10. A shaping method according to one of claims 1 to 9 **characterised in that** a cavity (5) of the mould is evacuated before the introduction of the fluid.

11. An introduction device for introducing a reactive fluid into a mould (2), by carrying out a shaping method according to one of claims 1 to 10, comprising
- a measuring device (6) for measuring a parameter which is characteristic of a pressure of the fluid,
- an open-loop or closed-loop control device (7) adapted to open-loop or closed-loop control the introduction device (3) and to store a progression (V) of measurement values of the measuring device (6) in a memory, **characterised in that** the open-loop or closed-loop control device (7) is adapted
- during the introduction of the fluid into the mould (2) to calculate a plurality of prognosis values (P2) of the parameter from the progression (V), and
- to establish a time of conclusion of the introduction of the fluid into the mould (2) on the basis of the plurality of prognosis values (P₂) in such a way that a previously defined pressure maximum (P₃) is substantially reached.

12. An introduction device according to claim 11 **characterised in that** the reactive fluid is a reactive mixture.

13. An introduction device according to claim 12 **characterised in that** a mixing head is provided for mixing and introducing the mixture, wherein preferably there is provided a high-pressure counterflow mixing head (8) which comprises at least two nozzles pointing into a chamber and a clearing slider for the chamber.

14. An introduction device according to one of claims 11 to 13 **characterised in that** the measuring device (6) includes one or more pressure sensors.

15. An arrangement for carrying out a shaping method, including a closing unit (10) with two mould mounting plates (11), to each of which a respective part of a mould (2) is fastened, and an introduction device according to one of claims 11 to 14.

16. An arrangement according to claim 15 **characterised in that** the open-loop or closed-loop control device (7) is integrated in a machine control of the closing unit (10).

## Revendications

1. Procédé de moulage pour une machine de moulage, dans lequel
- un fluide réactif est introduit dans un outil de moulage (2),
- une courbe (V) d'un paramètre, lequel est caractéristique pour une pression du fluide, est mesurée pendant l'introduction du fluide dans l'outil de moulage (2), et
- le fluide durcit en achevant sa réaction dans l'outil de moulage (2),
**caractérisé en ce que**
- pendant l'introduction du fluide dans l'outil de moulage (2), une pluralité de valeurs prévisionnelles (P2) sont calculées à partir de la courbe (V) et
- un instant de fin de l'introduction du fluide dans l'outil de moulage (2) est fixé sur la base de la pluralité de valeurs prévisionnelles (P2) de sorte qu'une pression maximale (P3) définie à l'avance est essentiellement atteinte.

2. Procédé de moulage selon la revendication 1, **caractérisé en ce qu'**un instant de fin de l'introduction du fluide dans l'outil de moulage (2) est fixé sur la base d'une parmi la pluralité de valeurs prévisionnelles (P2), de préférence de la dernière valeur prévisionnelle calculée (P2).

3. Procédé de moulage selon la revendication 1 ou 2, **caractérisé en ce que** pour calculer une valeur prévisionnelle (P2) à partir de la courbe (V), une courbe prévisionnelle est calculée et une valeur de la courbe prévisionnelle est utilisée comme valeur prévisionnelle (P2), dans lequel la courbe est de préférence calculée avec le temps comme paramètre d'indice.

4. Procédé de moulage selon la revendication 3, **caractérisé en ce que** pour la valeur prévisionnelle (P2) une valeur de la courbe prévisionnelle est utilisée, laquelle valeur correspond à un instant situé un laps de temps prédéfini après un dernier point de données de la courbe (V) sur laquelle est basée le calcul de la courbe prévisionnelle.

5. Procédé de moulage selon la revendication 4, **caractérisé en ce que** le laps de temps prédéfini correspond à un temps de réaction d'un dispositif d'introduction (3).

6. Procédé de moulage selon l'une des revendications 1 à 5, **caractérisé en ce qu'**un mélange réactif est utilisé comme fluide réactif.

7. Procédé de moulage selon la revendication 6, **caractérisé en ce qu'**au moins deux composants (A, B) sont mélangés pour former le mélange réactif.

8. Procédé de moulage selon l'une des revendications 1 à 7, **caractérisé en ce qu'**un semi-produit fibreux (4) est introduit dans l'outil de moulage (2) avant que le fluide réactif ne soit introduit dans l'outil de moulage (2).

9. Procédé de moulage selon l'une des revendications 1 à 8, **caractérisé en ce qu'**un procédé HP-RTM (moulage par transfert de résine à haute pression) est utilisé comme procédé de moulage.

10. Procédé de moulage selon l'une des revendications 1 à 9, **caractérisé en ce qu'**une cavité (5) de l'outil de moulage est évacuée avant l'introduction du fluide.

11. Dispositif d'introduction pour l'introduction d'un fluide réactif dans un outil de moulage (2) au cours de la mise en oeuvre d'un procédé de moulage selon l'une des revendications 1 à 10, doté
- d'un appareil de mesure (6) destiné à mesurer un paramètre, lequel est caractéristique pour une pression du fluide,
- d'un moyen de commande ou de régulation (7), lequel est réalisé pour commander ou pour réguler le dispositif d'introduction (3) et pour enregistrer dans une mémoire une courbe (V) de valeurs de l'appareil de mesure (6),
**caractérisé en ce que** le moyen de commande ou de régulation (7) est réalisé de façon à
- calculer à partir de la courbe (V) une pluralité de valeurs prévisionnelles (P2) pendant l'introduction du fluide dans l'outil de moulage (2) et
- fixer sur la base de la pluralité de valeurs prévisionnelles (P2) un instant de fin de l'introduction du fluide dans l'outil de moulage (2) de sorte qu'une pression maximale (P3) définie à l'avance est essentiellement atteinte.

12. Dispositif d'introduction selon la revendication 11, **caractérisé en ce que** le fluide réactif est un mélange réactif.

13. Dispositif d'introduction selon la revendication 12, **caractérisé en ce qu'**une tête de mélange est prévue pour le mélange et l'introduction du mélange, dans lequel une tête de mélange haute pression à contre-courant (8) est de préférence prévue, laquelle comprend au moins deux buses orientées vers l'intérieur d'une chambre et une glissière d'évidement pour la chambre.

14. Dispositif d'introduction selon l'une des revendications 11 à 13, **caractérisée en ce que** l'appareil de mesure (6) inclut un ou plusieurs capteurs de pression.

15. Système pour la mise en oeuvre d'un procédé de moulage, comprenant une unité de fermeture (10) dotée de deux plaques de fixation de moule (11), auxquelles est respectivement fixée une partie de l'outil de moulage (2), et un dispositif d'introduction selon l'une des revendications 11 à 14.

16. Système selon la revendication 15, **caractérisé en ce que** le moyen de commande ou de régulation est intégré dans une commande de machine de l'unité de fermeture (10).
